# FASCICULE DE BREVET EUROPEEN

(11) **EP 4 143 003 B1**
(45) Date de publication et mention de la délivrance du brevet: **10.04.2024**
(21) Numéro de dépôt: 21720276.1
(22) Date de dépôt: 22.04.2021
(51) Int. Cl.: B29C 49/42, B08B 5/02, B29C 49/28, F15B 13/04, F15B 13/07

(54) **DISTRIBUTEUR FLUIDIQUE TOURNANT ET DISPOSITIF DE TRAITEMENT DE L'INTERIEUR D'UNE PREFORME EQUIPE D'UN TEL DISTRIBUTEUR FLUIDIQUE**
ROTIERENDER FLUIDVERTEILER UND VORRICHTUNG ZUR INNENBEHANDLUNG EINER VORFORM MIT SOLCH EINEM ROTIERENDEN FLUIDVERTEILER
ROTATING FLUID DISTRIBUTOR AND DEVICE FOR TREATING THE INSIDE OF A PREFORM PROVIDED WITH SUCH A ROTATING FLUID DISTRIBUTOR

(30) Priorité: 29.04.2020 FR 2004273
(43) Date de publication de la demande: 08.03.2023
(73) Titulaire: Sidel Participations, 76930 Octeville-sur-Mer (FR)
(72) Inventeur: TROUILLET, Mickael, 76930 OCTEVILLE-SUR-MER (FR); QUETEL, François, 76930 OCTEVILLE-SUR-MER (FR)
(74) Mandataire: Sidel Group
(86) Numéro de dépôt international: PCT/EP2021/060481
(87) Numéro de publication internationale: WO 2021/219472

(56) Documents cités:
- DE-A1- 10 240 852
- FR-A1- 2 937 889
- FR-A1- 3 054 474
- US-A1- 2019 249 787

## Description

### Domaine technique de l'invention

L'invention concerne un distributeur fluidique tournant. Elle concerne aussi un dispositif de traitement de l'intérieur de préformes en matière thermoplastique par insufflation de gaz de traitement qui comporte un carrousel rotatif embarquant des organes de maintien des préformes, des tubes d'insufflation qui sont embarqués sur le carrousel en correspondance de chaque organe de maintien, et un tel distributeur fluidique tournant. De tels dispositifs sont décrits dans les documents US2019/249787A1 et FR3054474A1.

### Arrière-plan technique

On connaît de l'état de la technique des exemples de dispositif de traitement de l'intérieur d'au moins une préforme en matière thermoplastique par insufflation d'un gaz sous pression. Il s'agit par exemple d'un dispositif de dépoussiérage pour insufflation d'air sous pression ou encore un dispositif de stérilisation par insufflation d'un gaz stérilisant à l'intérieur de la préforme.

De manière connue, les préformes en matière thermoplastique sont destinées à la fabrication de récipients, tels que des bouteilles, flacons, pots etc.

Les préformes sont généralement fabriquées par moulage par injection de matière thermoplastique préalablement à leur transformation en récipients, généralement sur autre site industriel. Les préformes sont alors transportées en vrac de leur site de fabrication jusqu'à celui de leur transformation et le plus souvent stockées sur chacun d'eux.

Par conséquent, on a pu constater que différents types de poussières étaient alors susceptibles de pénétrer à l'intérieur des préformes. Par « poussières », on entend de manière non limitative de fines particules de matière, tels que des grains de poussières mais encore des morceaux d'emballage comme du carton, etc. ou de matière thermoplastique notamment mais non exclusivement sous la forme de filaments.

On connait de l'état de la technique l'utilisation d'un dispositif de dépoussiérage pour traiter des récipients obtenus à partir de préformes. Toutefois, les performances d'un tel dispositif ne sont pas satisfaisantes du fait de l'importance du volume d'un récipient par comparaison à celui d'une préforme. C'est la raison pour laquelle, on utilise avantageusement un dispositif de dépoussiérage pour éliminer les poussières présentes à l'intérieur des préformes. Le dispositif de dépoussiérage des préformes est par exemple agencé en amont du four.

Pour fabriquer des récipients, on rappelle que les préformes sont conditionnées thermiquement dans un four afin de ramollir la matière du corps en chauffant à une température permettant ensuite sa transformation, par soufflage ou par étirage-soufflage, dans un des moules d'une unité de moulage.

Pour ce faire, le dispositif de dépoussiérage comporte des moyens d'insufflation constitués par des tubes qui sont aptes à insuffler de l'air comprimé à l'intérieur de la préforme et qui sont associés à des moyens d'aspiration aptes à évacuer hors de la préforme simultanément l'air insufflé et les poussières. Le tube d'insufflation est monté mobile en translation par rapport à la préforme, coulissant axialement entre une position extrême escamotée et une position extrême insérée dans laquelle au moins une partie du tube est reçue à l'intérieur de la préforme.

Dans les dispositifs de dépoussiérage selon l'état de la technique, l'air est insufflé en permanence par un orifice situé à l'extrémité libre du tube au début de la phase de descente, soit au plus tard lors de son introduction à l'intérieur de la préforme. Le tube d'insufflation est décentré par rapport à l'axe de la préforme afin de limiter l'apparition d'un « bouchon de surpression » lors de l'introduction du tube dans la préforme. Ce bouchon de surpression est causé par le fait que le tube d'insufflation émet déjà de l'air sous pression lorsqu'il descend depuis sa position extrême escamotée vers sa position extrême insérée.

Un tel décalage radial de l'axe du tube par rapport à l'axe de la préforme limite parfois la profondeur avec laquelle le tube est susceptible d'être introduit à l'intérieur sans qu'une interférence ne se produise entre le tube et la préforme. Avec certaines préformes, le dépoussiérage obtenu n'est pas satisfaisant car le tube occupant sa position extrême insérée est alors trop éloigné du fond de la préforme pour chasser efficacement les poussières qui se concentrent notamment au fond en raison de la gravité.

Outre que le phénomène de « bouchon de surpression » limite également la vitesse à laquelle on réalise la descente du tube d'insufflation, la Demanderesse a pu établir que l'air de dépoussiérage insufflé pendant la descente avait pour effet de plaquer les poussières contre la surface interne et non pas comme recherché de balayer les poussières présentes à l'intérieur de la préforme.

Une installation de fabrication de récipients à partir de préformes en matière thermoplastique (encore appelée « souffleuse ») comporte par exemple successivement au moins un four, une unité de moulage et parfois une remplisseuse, en amont ou en aval de laquelle une étiqueteuse peut également être agencée, ainsi qu'une boucheuse pour fermer les récipients après remplissage. Dans de telles installations, les cadences de fabrication de récipients ne cessent de croître, par conséquent la durée d'un cycle de dépoussiérage opéré au moyen d'un dispositif de dépoussiérage intégré à une telle installation est également un facteur à prendre en compte.

On recherche également à améliorer les performances de tels dispositifs de dépoussiérage pour améliorer la fiabilité et en réduire les coûts d'exploitation, notamment la consommation d'air.

### Résumé de l'invention

L'invention propose un distributeur fluidique tournant pour une installation de traitement de préformes en matériau thermoplastique comme défini par la revendication 1.

Selon une autre caractéristique du distributeur fluidique tournant, la trajectoire circulaire de la lumière de traitement est divisée en deux secteurs angulaire comprenant un unique secteur angulaire actif et un unique secteur angulaire inactif.

Selon une autre caractéristique du distributeur fluidique tournant, le stator comporte un noyau qui est équipé de la canalisation d'alimentation, et un élément rapporté et fixé sur le noyau qui comporte la face d'obturation.

Selon une autre caractéristique du distributeur fluidique tournant, l'élément rapporté est formé par une bague de traitement qui est interposée radialement entre le noyau du stator et le rotor.

Selon une autre caractéristique du distributeur fluidique tournant, la chambre de distribution est délimitée radialement entre un segment de la bague de traitement et le rotor.

Selon une autre caractéristique du distributeur fluidique tournant, le rotor comporte une pluralité de lumières de traitement qui sont réparties régulièrement autour du rotor.

Selon une autre caractéristique du distributeur fluidique tournant, le rotor comporte au moins un manchon rapporté qui comporte toutes les lumières de traitement.

Selon une autre caractéristique du distributeur fluidique tournant, la bague de traitement est interchangeable de manière à pouvoir régler l'étendue du secteur angulaire inactif.

L'invention concerne aussi un dispositif de traitement de l'intérieur de préformes en matière thermoplastique par insufflation de gaz de traitement qui comporte :
- un carrousel monté rotatif autour d'un axe central sur un socle fixe, le carrousel embarquant des organes de maintien des préformes ;
- des tubes d'insufflation qui sont embarqués sur le carrousel en correspondance de chaque organe de maintien ;
caractérisé en ce qu'il comporte un distributeur fluidique tournant réalisé selon les enseignements de l'invention.

Selon une autre caractéristique du dispositif de traitement, chaque tube d'insufflation est monté coulissant sur le carrousel entre une position extrême escamotée dans laquelle elle est destinée à être entièrement à l'extérieur d'une préforme portée par l'organe de maintien associé, et une position extrême insérée dans laquelle elle est destinée à être insérée à l'intérieur d'une préforme portée par l'organe de maintien associé, le dispositif comportant au moins un actionneur qui est commandé automatiquement en fonction de la position angulaire du carrousel, chaque tube d'insufflation parcourant une trajectoire circulaire divisée d'amont en aval en :
- un premier secteur angulaire escamoté le long duquel chaque tube d'insufflation occupe sa position extrême escamotée ;
- un deuxième secteur angulaire d'insertion le long duquel chaque tube d'insufflation se déplace depuis sa position extrême escamotée jusqu'à sa position extrême insérée ;
- un troisième secteur angulaire inséré le long duquel chaque tube d'insufflation occupe sa position extrême insérée ;
- un quatrième secteur angulaire d'escamotage le long duquel chaque tube d'insufflation se déplace depuis sa position extrême insérée jusqu'à sa position extrême escamotée ;
le secteur angulaire actif du distributeur fluidique tournant coïncidant au moins avec le troisième secteur angulaire inséré.

Selon une autre caractéristique du dispositif de traitement, le secteur angulaire inactif du distributeur fluidique tournant coïncide au moins avec le deuxième secteur angulaire d'insertion.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue de dessus qui représente schématiquement un dispositif de traitement réalisé selon les enseignements de l'invention ;
[Fig. 2] La figure 2 est une vue en coupe axiale selon le plan de coupe 2-2 de la figure 1 qui représente un poste de traitement comportant une tube d'insufflation commandé par un vérin pneumatique dans sa position extrême insérée ;
[Fig. 3] La figure 3 est une vue en coupe axiale selon le plan de coupe 3-3 de la figure 1 qui représente un poste de traitement comportant une tube d'insufflation commandé par un vérin pneumatique dans sa position extrême escamotée ;
[Fig. 4] La figure 4 est une vue en perspective à plus grande échelle qui représente un distributeur fluidique tournant réalisé selon les enseignements de l'invention qui est installé au centre du dispositif de traitement de la figure 1 ;
[Fig. 5] La figure 5 est une vue en coupe axiale selon le plan de coupe 5-5 de la figure 4 qui représente les différents étages du dispositif fluidique tournant ;
[Fig. 6] La figure 6 est une vue en coupe horizontale selon le plan de coupe 6-6 de la figure 4 qui représente l'étage de traitement du distributeur fluidique tournant ;
[Fig. 7] La figure 7 est une vue en perspective qui représente une bague de traitement qui équipe l'étage de traitement du distributeur fluidique tournant pour commander l'ouverture et la fermeture de lumières de traitement ;
[Fig. 8] La figure 8 est une vue en coupe horizontale selon le plan de coupe 8-8 de la figure 4 qui représente un premier étage de pilotage du distributeur fluidique tournant ;
[Fig. 9] La figure 9 est une vue en perspective qui représente une première bague de pilotage qui équipe le premier étage de pilotage du distributeur fluidique tournant pour commander la circulation de gaz de travail dans des lumières d'actionnement ;
[Fig. 10] La figure 10 est une vue en coupe horizontale selon le plan de coupe 10-10 de la figure 4 qui représente un deuxième étage de pilotage du distributeur fluidique tournant ;
[Fig. 11] La figure 11 est un schéma fluidique qui représente la circulation du gaz de travail dans un poste de traitement du dispositif de traitement lorsque ce dernier fonctionne dans un mode normal ;
[Fig. 12] La figure 12 est un schéma fluidique qui représente la circulation du gaz de travail dans un poste de traitement du dispositif de traitement lorsque ce dernier fonctionne dans un mode sécurisé.

### Description détaillée de l'invention

Dans la suite de la description, des éléments présentant une structure identique ou des fonctions analogues seront désignés par une même référence.

Dans la suite de la description, on adoptera à titre non limitatif une orientation verticale parallèle à un axe "Z1" central du carrousel 32 et dirigée de bas en haut selon la flèche "V" des figures. On adoptera aussi des orientations radiales dirigées radialement depuis l'axe "Z1" central du carrousel 32 vers l'extérieur, et des orientations tangentielles dirigées orthogonalement aux orientations radiales et axiales. Le terme "circonférentiel" sera utilisé pour désigner un déplacement ou un élément s'étendant en arc de cercle centré sur l'axe "Z1 " central du carrousel 32.

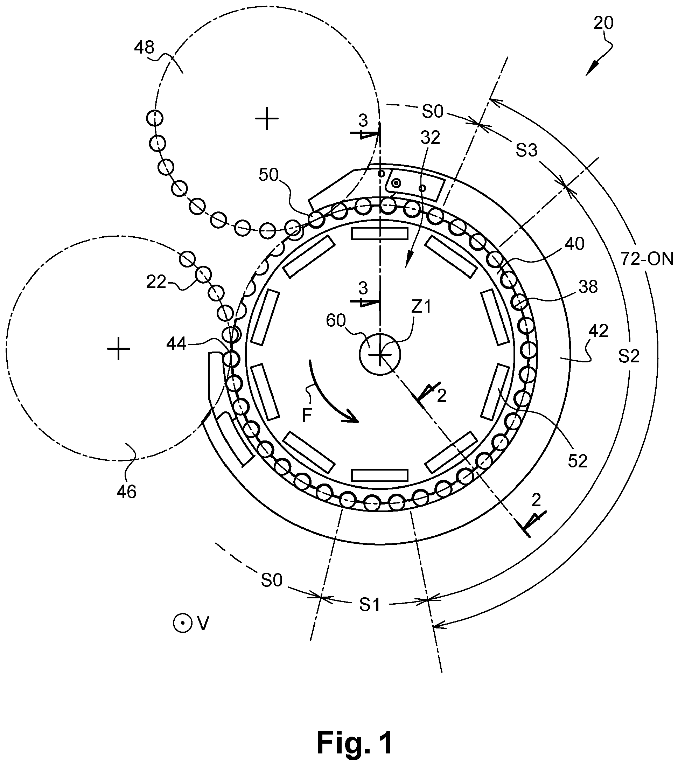

On a représenté à la figure 1 un dispositif 20 de traitement de l'intérieur d'une préforme 22 en matière thermoplastique. Il s'agit ici à titre d'exemple non limitatif d'un dispositif de dépoussiérage.

En variante non représentée de l'invention, il s'agit d'un dispositif de stérilisation de l'intérieur des préformes par insufflation d'un gaz stérilisation à l'intérieure de chaque préforme. Un tel dispositif est particulièrement utile lorsque les préformes présentent des dimensions telles que l'insufflation d'un gaz par une buse située à l'extérieur de la préforme ne permet pas d'atteindre le fond de la préforme. C'est notamment le cas lorsqu'il se forme une surpression locale de gaz au milieu de la préforme qui forme un bouchon.

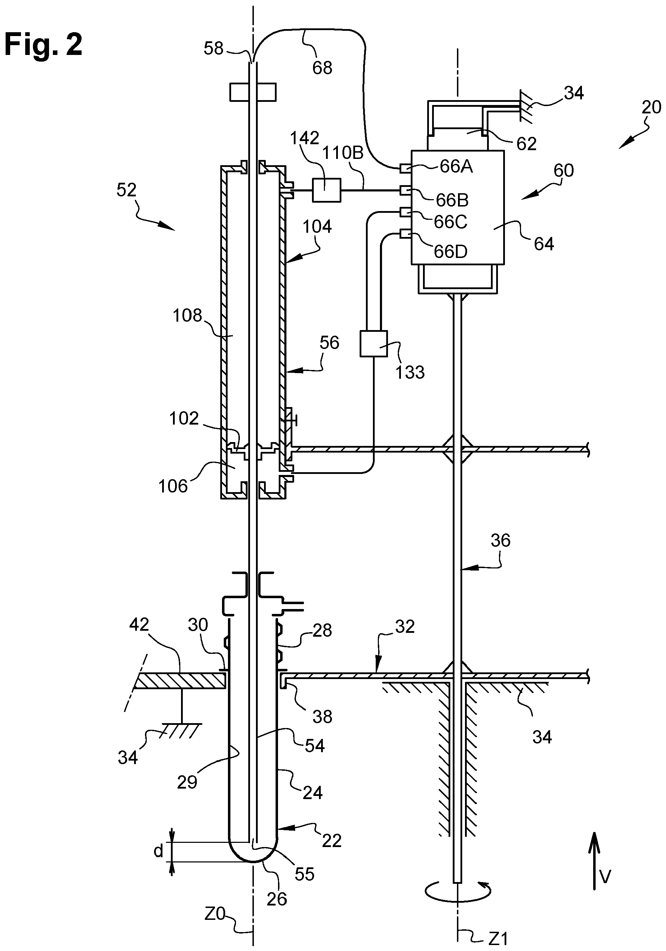

Une telle préforme 22 est représentée à la figure 2. Elle est réalisée en matériau thermoplastique, ici en polyéthylène téréphtalate (PET). Elle est classiquement obtenue par moulage par injection. Elle présente une forme sensiblement axisymétrique autour d'un axe "Z0" principal d'orientation verticale.

Comme représenté à la figure 2, elle présente un corps 24 cylindrique à paroi tubulaire fermé à son extrémité inférieure par un fond 26, et qui est prolongé à son extrémité supérieure par un col 28 ouvert verticalement vers le haut, lui aussi tubulaire. Une face 29 interne de la paroi délimite l'intérieur de la préforme 22. Le col 28 est généralement injecté de manière à posséder déjà sa forme définitive tandis que le corps 24 de la préforme 22 est destiné à subir une déformation relativement importante pour former le récipient final lors d'une étape ultérieure de formage.

Le col 28 de la préforme 22 comporte aussi une collerette 30 annulaire qui fait saillie radialement. La collerette 30 est ici agencée à la jonction entre la base du col 28 et le corps 24.

Le dispositif 20 de traitement comporte un carrousel 32 monté rotatif autour d'un axe "Z1" central vertical sur un socle 34 fixe. Le socle 34 est fixe par rapport au sol sur lequel repose le dispositif 20 de traitement.

Le carrousel 32 est plus particulièrement entraîné en rotation continue, ici dans un sens antihoraire comme indiqué par la flèche F de la figure 1, par un arbre 36 vertical d'axe "Z1" central, par exemple au moyen d'un moteur électrique non représenté.

Le carrousel 32 embarque des organes 38 de maintien des préformes 22 afin d'entraîner les préformes 22 en file le long d'une trajectoire commune en arc de cercle centrée sur l'axe "Z1" central.

Les organes 38 de maintien sont ici formés par des encoches en forme de demi-cercle réalisées en périphérie extérieure d'une couronne 40. La couronne 40 est montée fixe sur le carrousel 32. Chaque organe 38 de maintien permet de loger la partie du corps 24 de la préforme 22 située juste au-dessous de la collerette 30, tandis que la collerette 30 repose sur une face supérieure de la couronne 40 permettant ainsi d'entraîner la préforme 22 le long de sa trajectoire.

En variante non représentée de l'invention, les organes de maintien sont formés par des pinces qui saisissent chaque préforme juste au-dessus ou juste au-dessous de leur collerette.

Pour empêcher les préformes 22 de tomber sous l'effet de la force centrifuge lors de la rotation du carrousel 32, un rail 42 arqué, fixe par rapport au socle 34, est agencé le long de la trajectoire en arc de cercle des préformes 22. Les préformes 22 glissent ainsi le long du rail 42 qui permet de la retenir radialement à l'intérieur de leurs organes 38 de maintien associé.

La couronne 40 comporte par exemple trente-deux ou quarante organes 38 de maintien répartis régulièrement à sa périphérie. Le dispositif 20 de traitement est conçu pour permettre de transporter et de dépoussiérer un grand débit de préformes 22, par exemple de l'ordre de 60000 préformes par heure.

Comme représenté à la figure 1, les préformes 22 sont acheminées jusqu'à une entrée 44 du dispositif 20 de traitement par une roue 46 d'entrée schématisée par un cercle à la figure 1. Les préformes 22 sont transférée, après traitement, ici après dépoussiérage, sur une roue 48 de sortie schématisée par un cercle à la figure 1, au niveau d'une sortie 50. Les roues 46, 48 d'entrée et de sortie sont par exemple des roues à encoches présentant des organes 38 de maintien similaires à ceux décrits pour le carrousel 32. Entre l'entrée 44 et la sortie 50, la trajectoire des préformes 22 s'étend ici sur un secteur angulaire supérieur à 180°, par exemple de l'ordre de 300°.

Le carrousel 32 est aussi équipé de plusieurs postes 52 de traitement qui permettent de traiter, ici de dépoussiérer, les préformes 22 pendant leur transport depuis l'entrée 44 jusqu'à la sortie 50. Chaque poste 52 de traitement est embarqué sur le carrousel 32, c'est-à-dire que chaque poste 52 de traitement est entraîné en rotation autour de l'axe "Z1" central solidairement avec le carrousel 32.

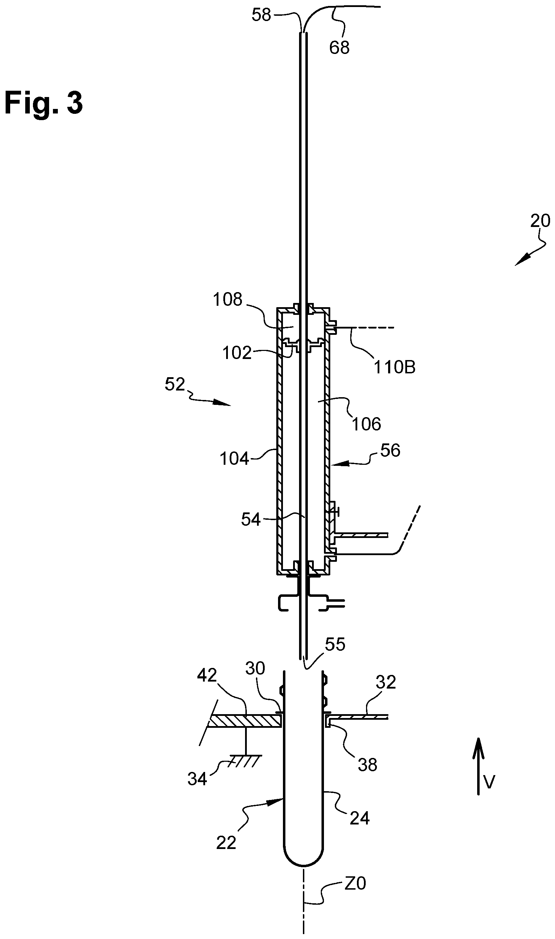

Comme cela est représenté aux figures 2 et 3, chaque poste 52 de traitement comporte au moins un tube 54 d'insufflation qui est embarqué sur le carrousel 32. Chaque tube 54 d'insufflation est agencé verticalement en correspondance avec un organe 38 de maintien associé. Ainsi, le carrousel 32 comporte autant de tube 54 d'insufflation que d'organe 38 de maintien.

Chaque tube 54 d'insufflation présente une extrémité inférieure libre qui est munie d'une buse 55 d'insufflation et une extrémité supérieure munie d'un orifice 58 d'alimentation qui est destinée à être raccordée à une source (non représentée) de gaz de traitement sous pression, comme cela sera expliqué plus en détails par la suite. S'agissant ici d'un traitement de dépoussiérage, le gaz de traitement est par exemple formé par de l'air. La pression du gaz de dépoussiérage est par exemple de l'ordre de 7 bars.

En variante, lorsque le dispositif de traitement est un dispositif de stérilisation de l'intérieur des préformes, le gaz de traitement est formé par un gaz stérilisant. Il s'agit par exemple d'un gaz comportant un agent oxydant puissant tel que du peroxyde d'hydrogène et/ou de l'acide peracétique.

Chaque tube 54 d'insufflation est monté coulissant verticalement sur le carrousel 32 entre une position extrême escamotée verticalement vers le haut, comme représentée à la figure 3, et une position extrême insérée inférieure comme représentée à la figure 2.

En position extrême insérée, un tronçon d'extrémité inférieur rectiligne vertical du tube 54 d'insufflation est destiné à être inséré à l'intérieur d'une préforme 22 portée par l'organe 38 de maintien associé par son col 28. Le tube 54 d'insufflation est ici coaxial à l'axe "Z0" principal de ladite préforme 22. Dans cette position extrême insérée, la buse 55 d'insufflation est agencée à une faible distance "d" du fond 26 de la préforme 22.

En position extrême escamotée, le tube 54 d'insufflation est entièrement extrait de la préforme 22 portée par l'organe 38 de maintien associé pour permettre le transfert d'une préforme 22 dépoussiérée vers la roue 48 de sortie radialement vers l'extérieur et la réception d'une nouvelle préforme 22 venant de la roue 46 d'entrée radialement vers l'intérieur de l'organe 38 de maintien.

Le coulissement de chaque tube 54 d'insufflation est commandé par au moins un actionneur qui est piloté automatiquement en fonction de la position angulaire du carrousel 32. Dans le mode de réalisation représenté aux figures, chaque poste 52 de traitement comporte un unique actionneur qui permet de commander simultanément le coulissement de tous les tubes 54 d'insufflation dudit poste 52 de traitement.

Un tel actionneur est par exemple formé par un moteur électrique piloté par un collecteur tournant ou par tout autre moyen de motorisation connu et adapté. Dans le mode de réalisation représenté aux figures l'actionneur est formé par un vérin 56 pneumatique qui sera décrits plus en détails par la suite.

Lors du fonctionnement du dispositif 20 de traitement dans un mode normal, chaque tube 54 d'insufflation parcourt une trajectoire circulaire divisée d'amont en aval en plusieurs secteurs angulaires fixes par rapport au socle 34 qui ont été représenté à la figure 1. On décrit le fonctionnement du dispositif 20 de traitement en mode normal pour un tube 54 d'insufflation, la description étant applicable à chacun des tubes 54 d'insufflation.

Le long d'un premier secteur angulaire, appelé par la suite secteur "S0" angulaire escamoté, le tube 54 d'insufflation occupe sa position extrême escamotée. Le long de ce premier secteur "S0" angulaire escamoté, chaque préforme 22 est réceptionnée dans un des organes 38 de maintien à l'entrée 44 alors que le tube 54 d'insufflation associé demeure dans sa position supérieure escamotée.

Le carrousel 32 poursuit sa rotation, amenant le tube 54 d'insufflation jusqu'à un deuxième secteur angulaire, appelé par la suite secteur "S1" angulaire d'insertion, le long duquel le tube 54 d'insufflation se déplace depuis sa position extrême escamotée jusqu'à sa position extrême insérée. Ce secteur "S1" angulaire d'insertion s'étend par exemple sur environ 25°.

Lorsque le tube 54 d'insufflation atteint sa position extrême insérée, il entre dans un troisième secteur angulaire de sa trajectoire, appelé par la suite secteur "S2" angulaire inséré, le long duquel chaque tube 54 d'insufflation demeure dans sa position extrême insérée. La buse 55 d'insufflation émet un jet continu de gaz de traitement sous pression qui chasse les poussières contenues dans la préforme 22 à l'extérieur en remontant le long de la face 29 interne de la préforme 22 jusqu'au col 28. Les poussières chassées à l'extérieur de la préforme 22 sont ensuite récoltées par un aspirateur à poussière (non représenté) pour éviter de polluer les autres préformes 22. Le secteur "S2" angulaire inséré s'étend par exemple sur environ 120°.

Lorsque le tube 54 d'insufflation atteint un quatrième secteur angulaire, appelé par la suite secteur "S3" angulaire d'escamotage, le tube 54 d'insufflation se déplace depuis sa position extrême insérée jusqu'à sa position extrême escamotée. Ce secteur "S3" angulaire d'escamotage s'étend par exemple sur environ 25°.

Lorsque le tube 54 d'insufflation atteint sa position extrême escamotée, il revient dans le secteur "S0" angulaire escamoté de sa trajectoire. Le tube 54 d'insufflation atteint sa position extrême escamotée avant que la préforme 22 n'atteigne la sortie 50 afin de permettre le transfert de la préforme 22 ainsi dépoussiérée vers la roue 48 de sortie.

La source de gaz de traitement est fixe par rapport au sol. Pour permettre d'acheminer le gaz de traitement jusqu'à chaque tube 54 d'insufflation, le dispositif 20 de traitement comporte un distributeur 60 fluidique tournant comportant au moins un premier étage 60A de traitement.

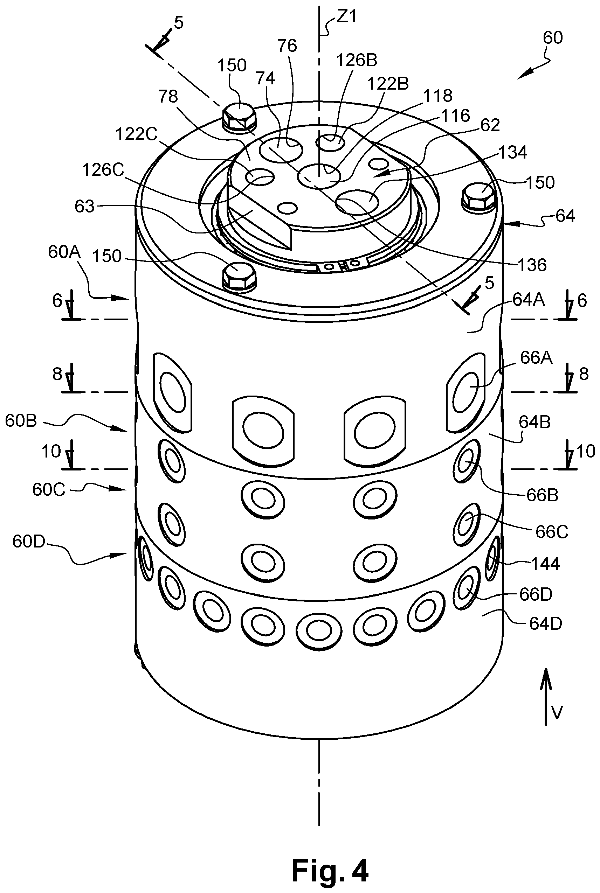

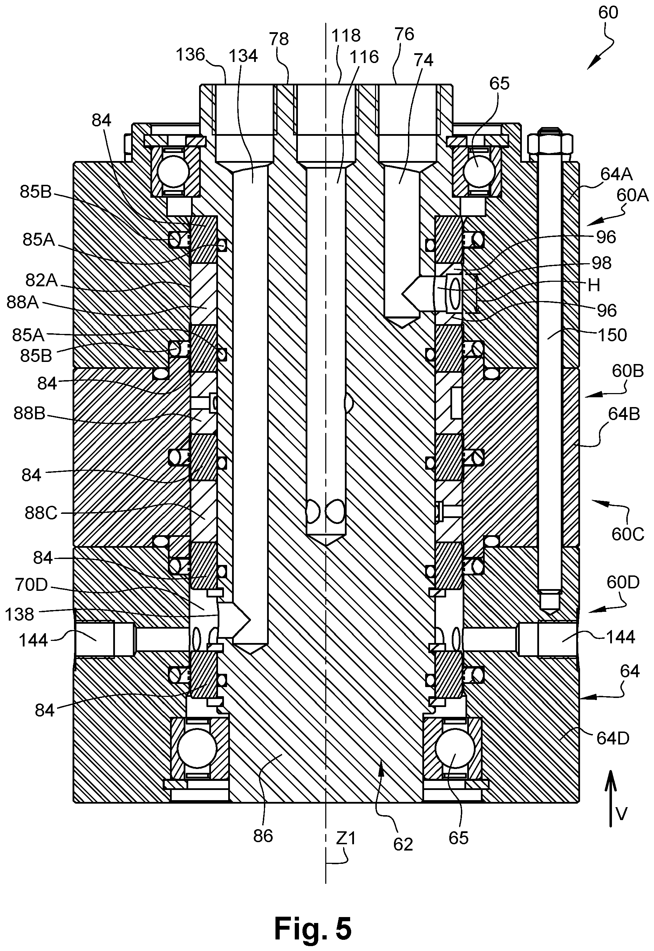

Comme représenté plus en détails aux figures 4 et 5, un tel distributeur 60 fluidique tournant comporte un stator 62 interne. Le stator 62 est monté fixe par rapport au socle 34, par exemple au moyen de méplats 63 coopérant avec un dispositif antirotation (non représenté) pour bloquer sa rotation par rapport au socle 34. Le stator 62 présente une forme globalement cylindrique coaxiale avec l'axe "Z1" central.

Il comporte aussi un rotor 64 externe. Le rotor 64 externe présente une forme de manchon d'axe vertical. Le rotor 64 est monté rotatif autour du stator 62 coaxialement à l'axe "Z1" central. Le rotor 64 est solidaire en rotation avec le carrousel 32.

Comme représenté à la figure 5, des paliers 65 de guidage en rotation du rotor 64 sont interposés radialement entre le rotor 64 et le stator 62. Le distributeur 60 fluidique tournant comporte ici deux paliers 65 de guidage qui sont agencés à chacune de ses extrémités verticales.

Il s'agit ici de paliers 65 de roulement. En variante non représentée de l'invention, il s'agit de paliers lisses.

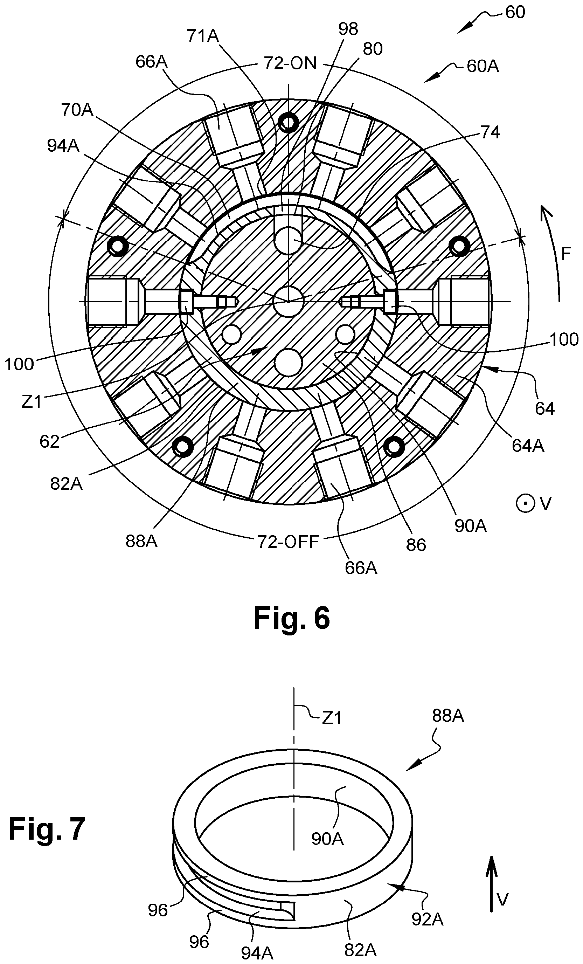

Comme représenté aux figures 4 et 6, pour former le premier étage 60A de traitement, le rotor 64 comporte au moins une lumière 66A de traitement le traversant radialement. La lumière 66A de traitement est raccordée à au moins un tube 54 d'insufflation par l'intermédiaire d'une conduite 68 souple représentée aux figures 2 et 3. La lumière 66A de traitement parcourt ainsi une trajectoire circulaire autour de l'axe "Z1" central.

Chaque lumière 66A de traitement est ici raccordée à un poste 52 de traitement. Chaque poste 52 de traitement comporte ici quatre tubes 54 d'insufflation. Ainsi une même lumière 66A de traitement permet d'alimenter simultanément quatre tubes 54 d'insufflation consécutifs du dispositif 20 de traitement. Le dispositif 20 de traitement représenté à la figure 1 comporte ainsi quarante tubes 54 d'insufflation qui sont portés par groupes de quatre par chacun de dix postes 52 de traitement. Le rotor 64 comporte ainsi dix lumières 66A de traitement qui sont agencées au même niveau et qui sont réparties régulièrement autour d'un même tronçon du rotor 64. Les dix lumières 66A de traitement sont plus particulièrement identiques de manière que le tronçon de rotor 64 les contenant présente une symétrie de rotation autour de l'axe "Z1" central.

Cette configuration permet avantageusement de limiter le nombre de lumières 66A de traitement réalisées dans le rotor 64, tout en permettant de commander la distribution de gaz de traitement par secteur comme cela sera expliqué par la suite.

En variante non représentée, chaque lumière de traitement peut alimenter un autre nombre de tubes d'insufflation, par exemple un, deux, trois ou plus.

En se reportant à la figure 6, une chambre 70A de distribution du gaz de traitement est interposée radialement entre le stator 62 et le rotor 64 au niveau de la lumière 66A de traitement. Ainsi, la lumière 66A de traitement est susceptible de déboucher dans la chambre 70A de distribution par une ouverture 71A interne sur au moins un premier secteur angulaire de sa trajectoire circulaire, dit "secteur 72-ON angulaire actif".

Comme représenté à la figure 5, la chambre 70A de distribution s'étend sur une hauteur "H" verticale qui est sensiblement égale ou légèrement supérieure à la hauteur de l'ouverture 71A interne de la lumière 66A de traitement. Dans le mode de réalisation représenté aux figures, l'ouverture 71A interne de la lumière 66A de traitement présente une section circulaire. La hauteur "H" de la chambre 70A de distribution est ici légèrement supérieure au diamètre de l'ouverture 71A interne.

L'étanchéité de la chambre 70A de distribution est assurée verticalement dans les deux sens par deux bagues 84 intercalaires qui sont interposées radialement entre le rotor 64 et le stator 62. Les bagues 84 intercalaires sont ici montées fixes par rapport au stator 62 et glissants par rapport au rotor 64.

Chaque bague 84 intercalaire est ici réalisée en un matériau métallique. Un joint 85A intérieur annulaire d'étanchéités en matériau élastomères est intercalé radialement entre le stator 62 et la bague 84 intercalaire, d'une part, et un joint 85B extérieur annulaire d'étanchéité est intercalé radialement entre le rotor 64 et la bague 84 intercalaire, d'autre part. Le joint 85B extérieur d'étanchéité est en appui radial glissant sur la face cylindrique externe de la bague 84 intercalaire. Les faces cylindriques interne et externe de la bague 84 intercalaire présentent un état de surface suffisamment lisse pour garantir verticalement l'étanchéité de la chambre 70A de distribution.

Le premier étage 60A de traitement comporte ainsi les lumières 66A de traitement et la chambre 70A de distribution.

Le stator 62 comporte une canalisation 74 d'alimentation en gaz de traitement qui alimente la chambre 70A de distribution du gaz de traitement. La canalisation 74 d'alimentation en gaz de traitement relie plus particulièrement au moins un orifice 76 amont formé dans une face 78 d'extrémité axiale, ici supérieure, du stator 62 à au moins un orifice 80 aval qui débouche dans la chambre 70A de distribution. L'orifice 80 aval débouche ici radialement vers l'extérieur au même niveau que les lumières 66A de traitement. A titre d'exemple, le stator 62 comporte ici un unique orifice 76 amont et un unique orifice 80 aval. La canalisation 74 d'alimentation en gaz de traitement est ici formée d'une unique conduite coudée qui comporte un tronçon globalement vertical qui est raccordée à l'orifice 76 amont, et un tronçon radial qui est raccordé à l'orifice 80 aval.

Pour permettre d'utiliser le gaz de traitement comprimé à bon escient, il est prévu d'interrompre l'alimentation des tubes 54 d'insufflation sur au moins un secteur angulaire de leur trajectoire, dit "secteur 72-OFF angulaire inactif". La trajectoire circulaire de la lumière 66A de traitement est ici divisée en deux secteurs angulaires complémentaires comprenant un unique secteur 72-ON angulaire actif et un unique secteur 72-OFF angulaire inactif. Par exemple, le secteur 72-ON angulaire actif coïncide au moins avec la totalité du secteur "S2" angulaire inséré.

En outre, le secteur 72-OFF angulaire inactif du distributeur 60 fluidique tournant coïncide au moins avec le secteur S1 angulaire d'insertion. Ceci permet notamment d'éviter l'effet de bouchon de surpression évoqué en préambule de la description. En conséquence, il est possible d'aligner le tube 54 d'insufflation avec l'axe "Z0" de la préforme 22 et ainsi de réduire la distance "d" au minimum.

Selon l'exemple illustré aux figures, le secteur 72-ON angulaire actif s'étend sur tout le secteur "S2" angulaire inséré et sur au moins une partie du secteur "S3" angulaire d'escamotage, tandis que le secteur 72-OFF angulaire inactif s'étend sur la partie complémentaire du secteur "S3" angulaire d'escamotage, sur le secteur "S0" angulaire escamoté et sur le secteur "S1" angulaire d'insertion. Ainsi, le secteur 72-ON angulaire actif s'étend par exemple sur environ 145°, à compter du début du secteur "S2" angulaire inséré, tandis que le secteur 72-OFF angulaire inactif s'étend sur la partie complémentaire de la trajectoire, soit environ 215°.

Pour réaliser cette alimentation par secteur des tubes 54 d'insufflation de manière simple et peu onéreuse, le stator 62 comporte une face 82A d'obturation fixe qui obture chaque lumière 66A de traitement sur le secteur 72-OFF angulaire inactif de leur trajectoire circulaire, comme représenté à la figure 5. A cet effet, la face 82A d'obturation présente une forme de segment cylindrique qui s'étend circonférentiellement sur ledit secteur 72-OFF angulaire inactif autour de l'axe "Z1" central du stator 62, tandis que la chambre 70A de distribution s'étend sur le secteur 72-ON angulaire actif.

Un jeu radial fonctionnel est réservé entre la face 82A d'obturation et le rotor 64 pour permettre la rotation du rotor 64 sans frottement. Cependant, ce jeu est suffisamment faible pour que le débit de gaz de traitement susceptible d'atteindre les lumières 66A de traitement obturées par la face 82A d'obturation soit négligeable.

Dans l'exemple représenté aux figures, le stator 62 est réalisé en plusieurs éléments distincts. Le stator 62 comporte ainsi un noyau 86 qui est équipé de la canalisation 74 d'alimentation en gaz de traitement. Le noyau 86 présente une forme cylindrique et il est agencé au centre du stator 62.

Le stator 62 comporte en outre un élément rapporté et fixé sur le noyau 86 qui comporte la face 82A d'obturation. L'élément rapporté est ici formé par une première bague, dite bague 88A de traitement, qui est interposée radialement entre le noyau 86 du stator 62 et le rotor 64. Comme représentée à la figure 7, la bague 88A de traitement est délimitée verticalement par une face supérieure annulaire plane et par une face inférieure annulaire plane et elle est délimitée radialement par une face 90A cylindrique interne et par une face 92A cylindrique externe.

La bague 88A de traitement est reçue de manière ajustée autour du noyau 86. Avantageusement, la bague 88A de traitement n'est pas reçue serrée autour du noyau 86, mais avec un jeu radial permettant son coulissement vertical pour permettre son montage et son démontage de manière aisée.

La chambre 70A de distribution est ici délimitée radialement entre un segment de la face externe de la bague 88A de traitement et le rotor 64. A cet effet, la face 92A externe comporte, sur ledit segment, un logement 94A concave. Le reste de la face 92A externe présente une surface cylindrique lisse formant la face 82A d'obturation. Le logement 94A concave est par exemple délimité verticalement par deux rebords 96.

En variante, le logement concave s'étend sur toute la hauteur de la bague de traitement.

La bague 88A de traitement est destinée à être fixée autour du noyau 86 au niveau des lumières 66A de traitement et au niveau de l'orifice 80 aval de la canalisation 74 d'alimentation en gaz de traitement. La bague 88A de traitement est traversée radialement d'un conduit 98 qui permet de faire communiquer l'orifice 80 aval avec l'intérieur de la chambre 70A de distribution. Le conduit 98 est ici agencé au milieu du logement selon le sens circonférentiel.

La bague 88A de traitement est montée de manière interchangeable sur le noyau 86 de manière à pouvoir régler l'étendue du secteur 72-OFF angulaire inactif en remplaçant la bague 88A de traitement actuelle par une bague 88A de traitement de remplacement présentant une face 82A d'obturation s'étendant sur un secteur angulaire différent.

La bague 88A de traitement est par exemple fixée au noyau 86 par l'intermédiaire de vis 100 de fixation radiales, ici au nombre de deux, comme représenté à la figure 6.

En variante non représentée, la bague de traitement est par exemple solidarisée en rotation avec le noyau par des moyens par emboîtement vertical de forme complémentaire tels qu'un méplat ou des cannelures. La bague de traitement est ensuite immobilisée verticalement au moyen des bagues intercalaires qui sont elles-mêmes fixées au noyau, par exemple par des rondelles élastiques de type "circlips".

La bague 88A de traitement est ici réalisée en un matériau plastique rigide. La bague 88A de traitement est par exemple réalisée par moulage.

En variante, la bague 88A de traitement est réalisée en un matériau métallique.

Comme expliqué précédemment, les actionneurs sont ici formés par des vérins 56 pneumatiques.

En se reportant à la figure 2, chaque vérin 56 pneumatique est piloté automatiquement en fonction de la position angulaire du carrousel 32. Le vérin 56 pneumatique comporte un piston 102 qui commande la montée et la descente du ou des tubes 54 d'insufflation associés. Le vérin 56 pneumatique comporte aussi un cylindre 104 dans lequel le piston 102 est monté coulissant verticalement entre une première position extrême supérieure correspondant à la position extrême escamotée des tubes 54 d'insufflation associés, comme représentée à la figure 3, et une position extrême inférieure correspondant à la position extrême insérée des tubes 54 d'insufflation associés, comme représentée à la figure 2.

Une première chambre 106 de travail pour la commande du vérin 56 pneumatique dans une première de ses positions extrêmes est délimitée entre le piston 102 et une des extrémités verticales du cylindre 104. La première chambre 106 de travail commande ici la montée du tube 54 d'insufflation vers sa position extrême escamotée.

S'agissant ici d'un vérin 56 pneumatique à double effet, le vérin 56 pneumatique comporte aussi une deuxième chambre 108 de travail pour la commande du vérin 56 pneumatique dans une deuxième de ses positions extrêmes qui est délimitée entre le piston 102 et l'autre des extrémités verticales du cylindre 104. La deuxième chambre 108 de travail commande ici la descente du tube 54 d'insufflation vers sa position extrême insérée.

En variante, le vérin pneumatique est un vérin simple effet. En ce cas, le vérin pneumatique ne comporte qu'une seule chambre de travail pour commander le coulissement du piston dans une de ses positions extrêmes, le piston étant commandé dans l'autre de ses positions extrêmes par un organe de rappel élastique tel qu'un ressort.

Le vérin 56 pneumatique est piloté au moyen du distributeur 60 fluidique tournant. A cet effet, le distributeur 60 fluidique tournant comporte un étage supplémentaire, dit étage 60B, 60C de pilotage, associé à chacune des chambres 106, 108 de travail du vérin 56 pneumatique.

Comme cela est visible aux figures 4 et 5, les différents étages 60A, 60B, 60C sont superposés verticalement. L'étage 60A de traitement est ici agencé à l'extrémité supérieure du distributeur 60 fluidique tournant.

Les références liées aux éléments appartenant au premier étage 60B de pilotage seront indiquées par le suffixe "B".

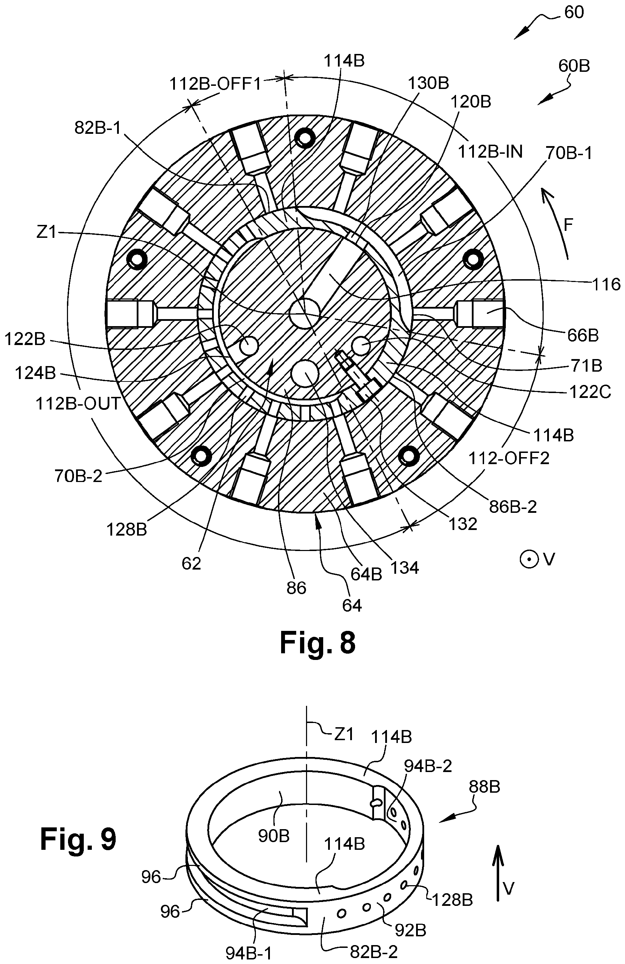

Comme représenté aux figures 4 et 8, pour former le premier étage 60B de pilotage, le rotor 64 comporte au moins une première lumière 66B d'actionnement qui est raccordée à la chambre de travail associée du vérin 56 pneumatique, ici la deuxième chambre 108, par l'intermédiaire d'une conduite 110B. La lumière 66B d'actionnement parcourt ainsi une trajectoire circulaire autour de l'axe "Z1" central. A titre non limitatif, le premier étage 60B de pilotage est associé à la deuxième chambre 108 de travail pour commander les tubes 54 d'insufflation vers leur position extrême insérée.

Chaque poste 52 de traitement comporte un vérin 56 pneumatique. Le premier étage 60B de pilotage du rotor 64 comporte ainsi dix lumières 66B d'actionnement qui sont agencées au même niveau et qui sont réparties régulièrement autour d'un même tronçon du rotor 64. Les dix lumières 66B d'actionnement sont plus particulièrement identiques de manière que le tronçon de rotor 64 les contenant présente une symétrie de rotation autour de l'axe "Z1" central.

Chaque lumière 66B d'actionnement est ici alignée verticalement sur une même ligne avec la lumière 66A de traitement associée au même poste 52 de traitement.

Comme représenté à la figure 8, le premier étage 60B de pilotage comporte une chambre 70B-1 de pression qui est interposée radialement entre le stator 62 et le rotor 64 au niveau des lumières 66B d'actionnement. Ainsi, la lumière 66B d'actionnement est susceptible de déboucher par une ouverture 71B interne dans la chambre 70B-1 de pression sur un premier secteur angulaire de sa trajectoire circulaire, dit "secteur angulaire 112B-IN d'actionnement".

Le premier étage 60B de pilotage comporte aussi une chambre 70B-2 d'échappement qui est interposée radialement entre le stator 62 et le rotor 64 au niveau de la lumière 66B d'actionnement. Ainsi, la lumière 66B d'actionnement est susceptible de déboucher par son ouverture 71B interne dans la chambre 70B-2 d'échappement sur un deuxième secteur angulaire de sa trajectoire circulaire, dit "secteur 112B-OUT angulaire d'échappement".

Le secteur 112B-IN angulaire d'actionnement et le secteur 112B-OUT angulaire d'échappement sont deux secteurs angulaires distincts qui ne se chevauchent pas. Des cloisons 114B radiales de séparation sont prévues pour isoler la chambre 70B-1 de pression de la chambre 70B-2 d'échappement.

Les chambres 70B-1, 70B-2 de pression et d'échappement s'étendent sur une hauteur "H" verticale commune qui est sensiblement égale ou légèrement supérieure à la hauteur de l'ouverture 71B interne de la lumière 66B d'actionnement. Dans le mode de réalisation représenté aux figures, l'ouverture 71B interne de la lumière 66B d'actionnement présente une section circulaire. La hauteur des chambres 70B-1, 70B-2 de pression et d'échappement est ici légèrement supérieure au diamètre de l'ouverture interne.

L'étanchéité des chambres 70B-1, 70B-2 de pression et d'échappement est assurée verticalement dans les deux sens de la même manière que l'étanchéité de la chambre 70A de distribution, c'est-à-dire par deux bagues 84 intercalaires circulaires qui sont intercalés radialement entre le rotor 64 et le stator 62. Un joint 85A intérieur d'étanchéités en matériau élastomères est intercalé radialement entre le stator 62 et la bague 84 intercalaire, d'une part, et un joint 85B extérieur d'étanchéité est intercalé radialement entre le rotor 64 et la bague 84 intercalaire, d'autre part.

Le stator 62, et plus particulièrement le noyau 86 du stator 62, comporte une canalisation 116 de pression qui alimente la chambre 70B-1 de pression en gaz de travail comprimé. La canalisation 116 de pression relie plus particulièrement au moins un orifice 118 amont formé dans la face 78 d'extrémité, ici supérieure, du stator 62 à au moins un orifice 120B aval d'alimentation de la chambre 70B-1 de pression. L'orifice 120B aval débouche ici radialement vers l'extérieur au même niveau que les lumières 66B d'actionnement. A titre d'exemple, le stator 62 comporte ici un unique orifice 118 amont et un unique orifice 120B aval d'alimentation de la chambre 70B-1 de pression. La canalisation 116 de pression est ici formée d'une unique conduite coudée qui comporte un tronçon globalement vertical qui est raccordée à l'orifice 118 amont, et un tronçon radial qui est raccordé à l'orifice 120B aval.

Le noyau 86 du stator 62 comporte en outre une canalisation 122B d'échappement qui permet d'évacuer le gaz de travail sous pression contenu dans la chambre 70B-2 d'échappement. La canalisation 122B d'échappement relie plus particulièrement au moins un orifice 124B amont qui débouche dans la chambre 70B-2 d'échappement au moins à au moins un orifice 126B aval formé dans une face 78 d'extrémité, ici supérieure, du stator 62. L'orifice 124B amont débouche ici radialement vers l'extérieur au même niveau que les lumières 66B d'actionnement. A titre d'exemple, le stator 62 comporte ici un unique orifice 124B amont et un unique orifice 126B aval. La canalisation 122B d'échappement est ici formée d'une unique conduite coudée qui comporte un tronçon globalement radial qui est raccordée à l'orifice 124B amont, et un tronçon vertical qui est raccordé à l'orifice 126B aval.

Le gaz qui s'échappe par la canalisation 122B d'échappement, bien que présentant une pression inférieure à la pression du gaz de travail entrant par la conduite d'alimentation, présente toujours une pression supérieure à la pression atmosphérique.

Le premier étage 60B de pilotage du stator 62 comporte deux faces 82B-1, 82B-2 d'obturation fixes qui obturent chaque lumière 66B d'actionnement sur des secteurs 112B-OFF1, 112B-OFF2 angulaires intermédiaire de leur trajectoire circulaire.

Le premier secteur 112B-OFF1 angulaire intermédiaire est intercalé circonférentiellement entre le secteur 112B-IN angulaire d'actionnement et le secteur 112B-OUT angulaire d'échappement selon le sens de rotation du rotor 64 indiqué par la flèche "F" de la figure 8. Le deuxième secteur 112B-OFF2 angulaire intermédiaire est intercalé circonférentiellement entre le secteur 112B-OUT angulaire d'échappement et le secteur 112B-IN angulaire d'actionnement selon le sens de rotation du rotor 64 indiqué par la flèche "F" de la figure 8.

A cet effet, chaque face 82B-1, 82B-2 d'obturation présente une forme de segment cylindrique qui s'étend circonférentiellement sur ledit secteur angulaire intermédiaire autour de l'axe "Z1" central du stator 62. Dans le mode de réalisation représenté aux figures, la première face 82B-1 d'obturation, qui correspond au secteur 112B-OFF1 angulaire intermédiaire situé juste avant le secteur "S3" angulaire d'escamotage, s'étend sur un angle très inférieur à la deuxième face 82B-2 d'obturation, qui correspond au secteur 112B-OFF2 angulaire intermédiaire qui est situé juste avant le secteur "S1" angulaire d'insertion. Par exemple, le premier secteur angulaire 112B-OFF1 intermédiaire s'étend sur 20° tandis que le deuxième secteur 112B-OFF2 angulaire intermédiaire s'étend sur 60°.

Un jeu radial fonctionnel est réservé entre chaque face 82B-1, 82B-2 d'obturation et le rotor 64 pour permettre la rotation du rotor 64 sans frottement. Cependant, ce jeu est suffisamment faible pour que le débit de gaz de travail susceptible d'atteindre les lumières 66B d'actionnement obturées par les faces 82B-1, 82B-2 d'obturation soit négligeable.

Comme pour l'étage 60A de traitement, le stator 62 comporte en outre un élément rapporté et fixé sur le noyau 86 qui comporte les faces 82B-1, 82B-2 d'obturation et les cloisons 114B de séparation. Comme représenté à la figure 9, l'élément rapporté est ici formé par une bague, dite première bague 88B de pilotage, qui est interposée radialement entre le noyau 86 du stator 62 et le rotor 64. La première bague 88B de pilotage est délimitée verticalement par une face supérieure annulaire plane et par une face inférieure annulaire plane et elle est délimitée radialement par une face 90B cylindrique interne et par une face 92B cylindrique externe.

La première bague 88B de pilotage est reçue de manière ajustée autour du noyau 86. Avantageusement, la première bague 88B de pilotage n'est pas reçue serrée autour du noyau 86, mais elle est reçue avec un jeu radial permettant son coulissement vertical pour permettre son montage et son démontage de manière aisée.

Une des deux chambres 70B-1, dite chambre externe, est ici délimitée radialement entre un segment de la face 92B externe de la première bague 88B de pilotage et le rotor 64. A cet effet, la face 92B externe comporte, sur ledit segment, un logement 94B-1 concave. Le reste de la face 92B externe présente une surface cylindrique lisse. Le logement 94B-1 concave est par exemple délimité verticalement par deux rebords 96.

En variante, le logement concave s'étend sur toute la hauteur de la première bague de pilotage.

La pression à l'intérieur des deux chambres 70B-1, 70B-2 est destinées à être très différente. Ainsi, la pression dans la chambre 70B-1 de pression est destinée à être très supérieure à celle de la chambre 70B-2 d'échappement. Si les deux chambres étaient réalisées de la même manière que la chambre 70B-1 externe, le gaz de travail serait susceptible de passer à travers le jeu fonctionnel réservé entre au moins l'une des faces 82B-1, 82B-2 d'obturation et le rotor 64, par exemple à travers le jeu fonctionnel délimité entre la première face 82B-1 d'obturation et le rotor 64 qui s'étend sur un secteur 112B-OFF1 angulaire intermédiaire plus court que le deuxième secteur 112B-OFF2 angulaire intermédiaire. Une partie non négligeable du gaz de travail arrivant par la canalisation 116 de pression repartirait ainsi directement par la canalisation 122B d'échappement. Pour éviter une telle fuite, il est proposé de réduire la section de passage entre les deux chambres 70B-1, 70B-2 à travers le jeu fonctionnel.

Pour ce faire, l'autre des deux chambres 70B-2, dite chambre interne, est délimitée radialement entre un deuxième segment de face 90B cylindrique interne de la première bague 88B et le noyau 86. A cet effet, la face interne comporte, sur ledit segment, un logement 94B-2 concave. Ledit logement 94B-2 s'étend ici sur toute la hauteur de la première bague 88B de pilotage.

La chambre 70B-2 interne forme ici la chambre 70B-2 d'échappement, tandis que la chambre 70B-1 externe forme la chambre 70B-1 de pression.

Pour faire communiquer la chambre 70B-2 interne avec les lumières 66B d'actionnement sur le secteur 112B-OUT angulaire d'échappement, le segment de face 92B cylindrique externe est équipé d'une pluralité d'orifices 128B traversants répartis sur sa longueur au niveau de la lumière 66B d'actionnement. Ainsi, la section de passage entre les deux chambres 70B-1, 70B-2 est réduites à la somme des sections des orifices 128 traversants. La dimension et la quantité des orifices traversants reste cependant suffisante pour permettre l'échappement du gaz de travail contenu dans la chambre 106, 108 de travail associée en direction de la chambre 70B-2 d'échappement sur le secteur angulaire d'échappement.

La chambre 70B-2 interne est séparée circonférentiellement de la chambre 70B-1 externe par les cloisons 114B de séparation radiales qui portent chacune l'une des faces 82B-1, 82B-2 d'obturation.

En variante non représentée de l'invention, la chambre interne forme la chambre de pression, tandis que la chambre externe forme la chambre d'échappement.

La première bague 88B de pilotage est destinée à être fixée autour du noyau 86 au niveau des lumières 66B d'actionnement et au niveau de l'orifice 120B aval de la canalisation 116 de pression et de l'orifice 124B amont de la canalisation 122B d'échappement. La première bague 88B de pilotage est traversée radialement d'un conduit 130B qui permet de faire communiquer l'orifice 120B aval de la canalisation 116 de pression avec l'intérieur de la chambre 70B-1 de pression. Le conduit 130B est ici agencé au milieu du logement dans le sens circonférentiel. L'orifice 124B amont de la canalisation 122B d'échappement débouche quant à lui directement dans le logement délimitant la chambre 70B-2 d'échappement.

La première bague 88B de pilotage est montée de manière interchangeable sur le noyau 86 de manière à pouvoir régler l'étendue des secteurs angulaires 112B-IN, 112B-OFF1, 112B-OUT, 112B-OFF2 en remplaçant la première bague 88B de pilotage actuelle par une bague de pilotage de remplacement présentant des chambres 70B-1, 70B-2 de pression et d'échappement s'étendant sur des secteurs angulaires différents.

La première bague 88B de pilotage est par exemple fixée au noyau 86 par l'intermédiaire d'une vis 132 de fixation.

En variante non représentée, la première bague de pilotage est par exemple solidarisée en rotation avec le noyau par des moyens par emboîtement vertical de forme complémentaire tels qu'un méplat ou des cannelures. La première bague de pilotage est ensuite immobilisée verticalement au moyen des bagues intercalaires.

La première bague 88B de pilotage est ici réalisée en un matériau plastique rigide. La première bague 88B de pilotage est par exemple réalisée par moulage.

En variante, la bague de pilotage est réalisée en un matériau métallique.

S'agissant ici d'un vérin 56 pneumatique à double action, le distributeur 60 fluidique tournant comporte un deuxième étage 60C de pilotage qui est presque identique au premier étage 60B de pilotage. Le deuxième étage 60C de pilotage comporte ainsi des lumières 66C d'actionnement identiques à celles du premier étage 60B de pilotage, mais elles sont raccordées à la première chambre 106 de travail du vérin 56 pneumatique associé.

Cependant, le deuxième étage 60C de pilotage diffère du premier en ce que la position des chambres 70C-1, 70C-2 de pression et d'échappement sont modifiées afin que la chambre 70B-1 de pression du premier étage 60B de pilotage soit en coïncidence avec la chambre 70C-2 d'échappement du deuxième étage 60C de pilotage, tandis que la chambre 70B-2 d'échappement du premier étage 60B de pilotage est en coïncidence avec la chambre 70C-1 de pression du deuxième étage 60C de pilotage. Ainsi, le secteur 112C-IN angulaire d'actionnement du deuxième étage 60C de pilotage coïncide avec le secteur 112B-OUT angulaire d'échappement du premier étage 60B de pilotage, tandis que le secteur 112C-OUT angulaire d'échappement du deuxième étage 60C de pilotage coïncide avec le secteur 112B-IN angulaire d'actionnement du premier étage 60B de pilotage.

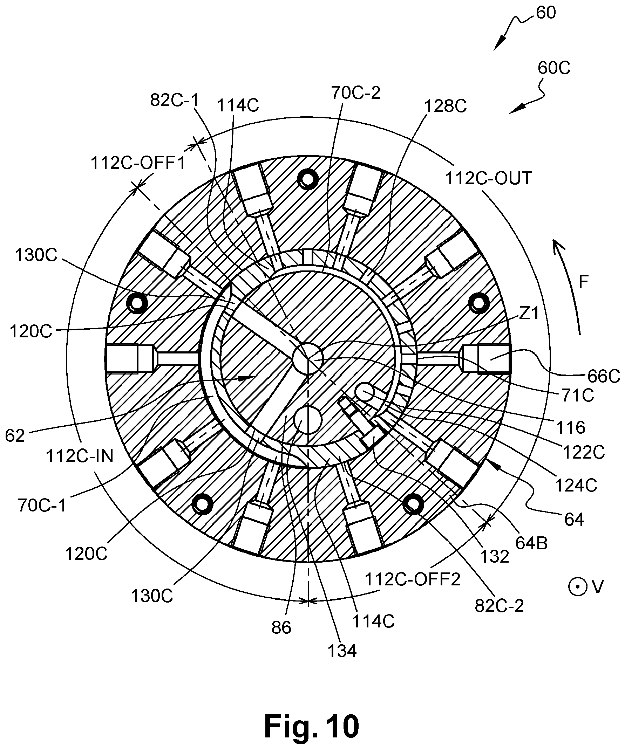

La description du premier 60B étage de pilotage effectuée précédemment est ainsi applicable au deuxième étage 60C de pilotage. On se reportera à la figure 10 sur laquelle on a remplacé le suffixe "B" des références par le suffixe "C".

Le deuxième étage 60C de pilotage est ici agencé verticalement au-dessous du premier étage 60B de pilotage.

La chambre 70C-1 de pression du deuxième étage 60C de pilotage est ici alimentée par la même canalisation 116 de pression. Ainsi, le tronçon globalement vertical de la conduite coudée formant la canalisation 116 de pression est commun aux deux étages 60B, 60C de pilotage et il alimente un deuxième tronçon radial qui est raccordé à deux orifices 120C aval qui alimentent la chambre 70C-1 de pression du deuxième étage 60C de pilotage.

En revanche, le deuxième étage 60C de pilotage comporte une canalisation 122C d'échappement distincte de la canalisation 122B d'échappement associée au premier étage 60B de pilotage. Les deux canalisations 122B, 122C d'échappement ne communiquent pas entre elles à l'intérieur du noyau 86.

Le deuxième étage 60C de pilotage comporte aussi une bague 88C de pilotage similaire à celle du premier étage 60B de pilotage. La bague 88C de pilotage du deuxième étage 60C de pilotage est identique à la bague 88B de pilotage qui est représentée à la figure 9 en retournant la bague, c'est-à-dire en inversant la direction de la flèche "V".

Pour des raisons de sécurité, le dispositif 20 de traitement est susceptible de fonctionner selon un mode sécurisé dans lequel tous les actionneurs sont commandés rapidement et simultanément dans leur position extrême escamotée en cas de dysfonctionnement du dispositif 20 de traitement afin d'éviter que les tubes 54 d'insufflation n'entrent en collision avec d'autres éléments, tels que des préformes 22.

Lorsque le dispositif 20 de traitement est muni de vérins 56 pneumatiques dans lesquels il est nécessaire d'alimenter la première chambre 106 de travail associée du vérin 56 pneumatique en gaz de travail pour commander les tubes 54 d'insufflation en position extrême escamotée, comme c'est le cas des exemples représentés aux figures, le distributeur 60 fluidique tournant comporte un quatrième étage 60D de sécurité. Cet étage 60D de sécurité fonctionne comme un raccord tournant qui alimente simultanément tous les vérins 56 pneumatique en gaz de travail pour les commander vers leur position extrême escamotée.

L'étage 60D de sécurité est ici agencé à l'extrémité inférieure du distributeur 60 fluidique tournant.

Pour former l'étage 60D de sécurité, le rotor 64 comporte autant de lumières 66D de sécurité le traversant radialement que le dispositif 20 de traitement comporte de vérins 56 pneumatique. Chaque lumière 66D de sécurité est raccordée à la première chambre 106 de travail associée. Chaque lumière 66D de sécurité parcourt ainsi une trajectoire circulaire autour de l'axe "Z1" central. Le raccordement à la première chambre 106 de travail est réalisé par l'intermédiaire d'un sélecteur 133 de circuit qui permet de raccorder la première chambre 106 de travail alternativement à la lumière 66D de sécurité ou à la lumière 66C d'actionnement du deuxième étage 60C de pilotage associé.

Le rotor 64 comporte ainsi dix lumières 66D de sécurité qui sont agencées au même niveau et qui sont réparties régulièrement autour d'un même tronçon du rotor 64. Les dix lumières 66D de sécurité sont plus particulièrement identiques de manière que le tronçon de rotor 64 les contenant présente une symétrie de rotation autour de l'axe "Z1" central.

Chaque lumière 66D de sécurité est ici alignée verticalement sur une même ligne avec la lumière 66A de traitement associée au même poste 52 de traitement.

Une chambre 70D de sécurité est interposée radialement entre le stator 62 et le rotor 64 au niveau des lumières 66D de sécurité. La chambre 70D de sécurité présente une forme annulaire qui fait tout le tour du stator 62. Ainsi, chaque lumière 66D de sécurité débouche par une ouverture 71D interne en permanence dans la chambre 70D de sécurité sur toute sa trajectoire circulaire. La chambre 70D de sécurité est ici délimitée radialement directement par le noyau 86 vers l'intérieur et directement par le rotor 64 vers l'extérieur.

La chambre 70D de sécurité s'étend sur une hauteur verticale qui est sensiblement égale ou légèrement supérieure à la hauteur de l'ouverture 71D interne de la lumière 66D de sécurité. Dans le mode de réalisation représenté aux figures, l'ouverture 71D interne de la lumière 66D de sécurité présente une section circulaire. La hauteur de la chambre 70D de sécurité est ici légèrement supérieure au diamètre de l'ouverture 71D interne.

Le noyau 86 du stator 62 comporte une canalisation 134 de sécurité pour l'alimentation en gaz de travail de la chambre 70D de sécurité en gaz de travail. La canalisation 134 de sécurité relie plus particulièrement au moins un orifice 136 amont formé dans une face 78 d'extrémité, ici supérieure, du stator 62 à au moins un orifice 138 aval qui débouche dans la chambre 70D de sécurité. A titre d'exemple, le stator 62 comporte ici un unique orifice 136 amont et un unique orifice 138 aval. La canalisation 134 de sécurité est ici formée d'une unique conduite coudée qui comporte un tronçon globalement vertical qui est raccordée à l'orifice 136 amont, et un tronçon radial qui est raccordé à l'orifice 138 aval. La canalisation 134 de sécurité est ici indépendante de la canalisation 116 de pression, c'est-à-dire que les deux canalisations 116, 134 ne communiquent pas entre elles.

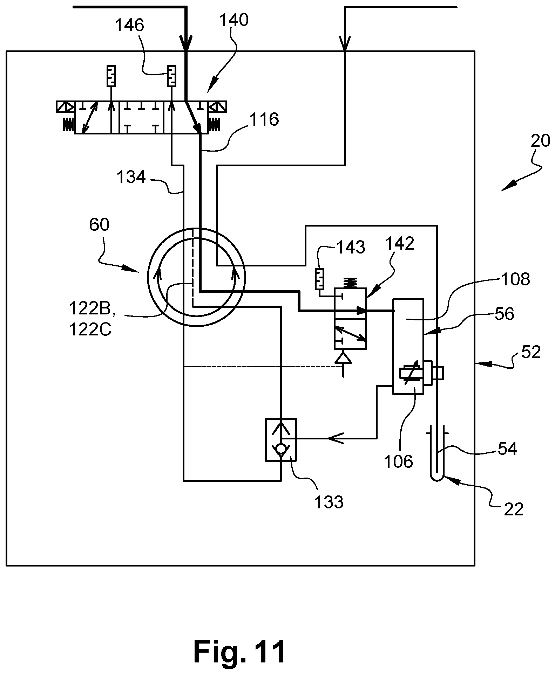

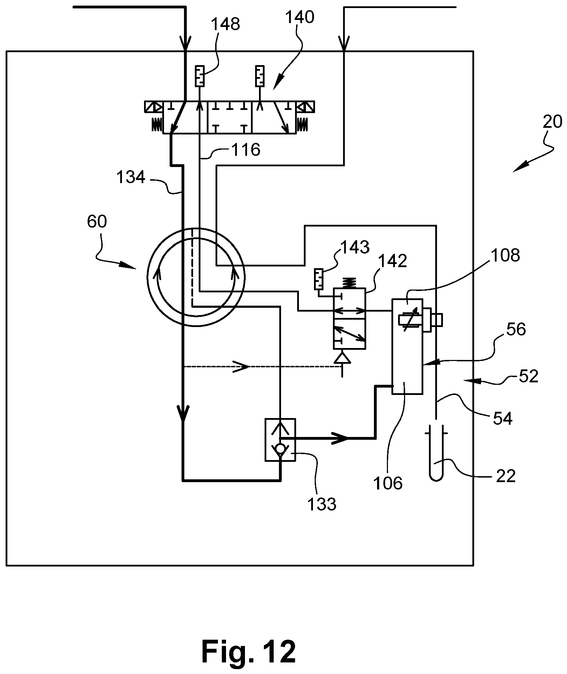

Cette canalisation 134 de sécurité est alimentée en gaz de travail de manière commandé au moyen d'un distributeur 140 amont qui alimente alternativement la canalisation 116 de pression ou la canalisation 134 de sécurité. Le distributeur 140 est agencé en amont du distributeur 60 fluidique tournant. Ce distributeur 140 amont présente ici trois positions. Dans une première position normale, représentée à la figure 11 et correspondant au mode normal, il alimente la canalisation 116 de pression, tandis que la canalisation 134 de sécurité est obturée. Dans une position de sécurité, illustrée à la figure 12 et correspondant au mode sécurisé, il alimente la canalisation 134 de sécurité en gaz de travail, tandis que la canalisation 116 de sécurité est obturée. Dans une position neutre (non représentée), correspondant à l'arrêt total du dispositif 20 de traitement, aucune des deux canalisations n'est alimentée en gaz de travail.

La canalisation 134 de sécurité et la canalisation 116 de pression sont ici raccordées à une même source de gaz de travail par l'intermédiaire du distributeur 140 amont. La source de gaz de traitement est ici distincte de la source de gaz de travail. La source de gaz de travail est ici fixe par rapport au sol.

En outre, en mode sécurisé, il faut que le gaz de travail contenu dans la deuxième chambre 108 de travail du vérin 56 pneumatique puisse être évacué par un échappement 143 en permanence. A cet effet, la deuxième chambre 108 de travail est raccordée à un distributeur 142 aval, ici du type distributeur à tiroir, qui est commandé entre une position de fonctionnement normal, illustrée à la figure 11, et une position de sécurité, illustrée à la figure 12. Le distributeur 142 aval est donc embarqué sur le carrousel 32. Le distributeur 142 aval permet de raccorder alternativement la deuxième chambre 108 de travail soit à la lumière 66B d'actionnement associée en mode normal, soit à un échappement 143 embarqué sur le carrousel 32 en mode sécurisé.

Le tiroir du distributeur 142 aval est ici rappelé élastiquement dans sa position de fonctionnement normal. Pour commander automatiquement le distributeur 142 aval dans sa position de sécurité, le tiroir du distributeur 142 aval est actionné par le gaz de travail au moyen d'une conduite raccordant la chambre 70D de sécurité au distributeur 142 aval, par exemple au moyen d'un actionneur (non représenté) tel qu'un piston ou une bobine électrique. Le gaz de travail pousse ainsi le tiroir vers sa position de fonctionnement sécurisé à l'encontre de l'effort de rappel élastique.

A cet effet, le rotor 64 comporte des orifices 144 de déclenchement qui sont agencés au même niveau que les lumières 66D de sécurité et en alternance avec eux autour de l'étage 60D de sécurité du rotor 64. Chaque orifice 144 de déclenchement est raccordé au vérin d'un distributeur 142 aval associé.

Lorsque le dispositif 20 de traitement fonctionne en mode normal, le distributeur 140 amont occupe sa position normale. La chambre 70D de sécurité est alors reliée à un échappement 146 situé en amont du distributeur 140 amont, tandis que les chambre 70B-1 et 70C-1 de pression des étages 60B, 60C de pilotage sont alimentées en gaz de travail comprimé. Le sélecteur 133 de circuit est commandé pour raccorder la première chambre 106 de travail du vérin 56 pneumatique à la lumière 66C d'actionnement du deuxième étage 60C de pilotage associé. Le distributeur 142 aval occupe sa position normale dans laquelle la deuxième chambre 108 de travail du vérin 56 pneumatique est raccordée à la lumière 66B d'actionnement du premier étage 60B de pilotage associé.

Comme représenté à la figure 12, lorsque le dispositif 20 de traitement fonctionne en mode sécurisé, le distributeur 140 amont occupe sa position de sécurité. La chambre 70D de sécurité est alors alimentées en gaz de travail comprimé, tandis que les chambre 70B-1 et 70C-1 de pression des étages 60B, 60C de pilotage sont reliée à un échappement 148 situé en amont du distributeur 140 amont. Le sélecteur 133 de circuit est commandé pour raccorder la première chambre 106 de travail du vérin 56 pneumatique à la lumière 66D de sécurité de l'étage 60D de sécurité. Le distributeur 142 aval occupe sa position de sécurité dans laquelle la deuxième chambre 108 de travail du vérin 56 pneumatique est raccordée à l'échappement 143.

Lors du montage du distributeur 60 fluidique tournant, la bague 88A de traitement et les bagues 88B, 88C de pilotages sont insérées verticalement autour du noyau 86 et empilées avec intercalage vertical des bagues 85 intercalaires. Cet empilement est ici en appui vers le haut contre un épaulement du noyau avec intercalage d'une autre bague 85 intercalaire entre la bague 88A de traitement et l'épaulement. Cet empilement est ensuite maintenu en place par un anneau élastique.

La chambre 70D est formée au moyen d'une dernière bague intercalaire qui est enfilée autour du noyau et fixée à distance verticale de la bague 85 intercalaire d'extrémité inférieure de l'empilement.

La bague 88A de traitement et les bagues 88B, 88C sont ensuite solidarisées en rotation avec le noyau 86 par leurs vis 100, 132 respectives.

Le rotor 64 est ensuite enfilé autour du stator 62 ainsi formé avec interposition des paliers 65 de roulement.

Pour permettre de simplifier le montage du distributeur 60 fluidique tournant, et éventuellement de pouvoir l'adapter indifféremment à des dispositifs 20 de traitement à vérin simple action, à vérin double action ou encore à d'autres types d'actionneurs, le rotor 64 comporte est réalisé en plusieurs manchons rapportés correspondant chacun à un tronçon du rotor 64. Ainsi, un premier manchon 64A de rotor 64 comportant toutes les lumières 66A de traitement est utilisé pour réaliser l'étage 60A de traitement. Ici, un unique manchon 64B de rotor 64 comportant toutes les lumières 66B et 66C d'actionnement est ici commun aux deux étages 60B, 60C de pilotage. Enfin, un dernier manchon 64D de rotor 64 comportant toutes les lumières 66D de sécurité et les orifices 144 de déclenchement est utilisé pour réaliser l'étage 60D de sécurité. Tous les manchons 64A, 64B, 64D de rotor 64 sont ici empilés et maintenus serrés verticalement ensemble par au moins un tire-fond 150 vertical.

L'invention permet ainsi d'utiliser le gaz de traitement uniquement sur les sections utiles de la trajectoire des tubes 54 d'insufflation. En outre, la distribution du gaz de traitement est réalisée de manière simple par un distributeur 60 fluidique tournant.

## Revendications

1. Distributeur (60) fluidique tournant pour un dispositif (20) de traitement de l'intérieur de préformes (22) en matière thermoplastique par insufflation de gaz de traitement qui comporte un carrousel (32) monté rotatif autour d'un axe (Z1) central sur un socle (34) fixe, le carrousel (32) embarquant des organes (38) de maintien des préformes (22) et des tubes (54) d'insufflation qui sont embarqués sur le carrousel (32) en correspondance de chaque organe (38) de maintien, ledit distributeur comportant :
-- un stator (62) interne qui est destiné à être monté fixe par rapport à un socle (34), le stator (62) comportant une canalisation (74) d'alimentation en gaz de traitement ;
-- un rotor (64) externe qui est monté rotatif autour du stator (62) autour d'un axe (Z1) central et qui comporte au moins une lumière (66A) de traitement traversant radialement le rotor (64) qui est destinée à être raccordée à au moins un tube (54) d'insufflation du gaz de traitement dans une préforme (22), la lumière (66A) de traitement parcourant une trajectoire circulaire autour de l'axe (Z1) central ;
-- une chambre (70A) de distribution interposée radialement entre le stator (62) et le rotor (64), la chambre (70A) de distribution étant alimentée en gaz de traitement par la canalisation (74) d'alimentation, et la lumière (66A) de traitement débouchant dans la chambre (70A) de distribution sur au moins un premier secteur angulaire de sa trajectoire circulaire, dit "secteur (72-ON) angulaire actif" ;
**caractérisé en ce que** le stator (62) comporte une face (82A) d'obturation fixe qui obture chaque lumière (66A) de traitement sur un deuxième secteur angulaire de leur trajectoire circulaire, dit "secteur (72-OFF) angulaire inactif".

2. Distributeur (60) fluidique tournant selon la revendication précédente, **caractérisé en ce que** la trajectoire circulaire de la lumière (66A) de traitement est divisée en deux secteurs angulaire comprenant un unique secteur (72-ON) angulaire actif et un unique secteur (72-OFF) angulaire inactif.

3. Distributeur (60) fluidique tournant selon l'une quelconque des revendications précédentes, **caractérisé en ce que** le stator (62) comporte un noyau (86) qui est équipé de la canalisation (74) d'alimentation, et un élément rapporté et fixé sur le noyau (86) qui comporte la face (82A) d'obturation.

4. Distributeur (60) fluidique tournant selon la revendication précédente, **caractérisé en ce que** l'élément rapporté est formé par une bague (88A) de traitement qui est interposée radialement entre le noyau (86) du stator (62) et le rotor (64).

5. Distributeur (60) fluidique tournant selon la revendication précédente, **caractérisé en ce que** la chambre (70A) de distribution est délimitée radialement entre un segment de la bague (88A) de traitement et le rotor (64).

6. Distributeur (60) fluidique tournant selon l'une quelconque des revendications précédentes, **caractérisé en ce que** le rotor (64) comporte une pluralité de lumières (66A) de traitement qui sont réparties régulièrement autour du rotor (64).

7. Distributeur (60) fluidique tournant selon l'une quelconque des revendications précédentes, **caractérisé en ce que** le rotor (64) comporte au moins un manchon (64A) rapporté qui comporte toutes les lumières (66A) de traitement.

8. Distributeur (60) fluidique tournant selon l'une quelconque des revendications 4 ou 5, **caractérisé en ce que** la bague (88A) de traitement est interchangeable de manière à pouvoir régler l'étendue du secteur (72-OFF) angulaire inactif.

9. Dispositif (20) de traitement de l'intérieur de préformes (22) en matière thermoplastique par insufflation de gaz de traitement qui comporte :
- un carrousel (32) monté rotatif autour d'un axe (Z1) central sur un socle (34) fixe, le carrousel (32) embarquant des organes (38) de maintien des préformes (22) ;
- des tubes (54) d'insufflation qui sont embarqués sur le carrousel (32) en correspondance de chaque organe (38) de maintien ;
**caractérisé en ce qu'**il comporte un distributeur (60) fluidique tournant réalisé selon l'une quelconque des revendications précédentes.

10. Dispositif (20) de traitement selon la revendication précédente, **caractérisé en ce que** chaque tube (54) d'insufflation est monté coulissant sur le carrousel (32) entre une position extrême escamotée dans laquelle elle est destinée à être entièrement à l'extérieur d'une préforme (22) portée par l'organe (38) de maintien associé, et une position extrême insérée dans laquelle elle est destinée à être insérée à l'intérieur d'une préforme (22) portée par l'organe (38) de maintien associé, le dispositif (20) comportant au moins un actionneur (56) qui est commandé automatiquement en fonction de la position angulaire du carrousel (32), chaque tube (54) d'insufflation parcourant une trajectoire circulaire divisée d'amont en aval en :
- un premier secteur (S0) angulaire escamoté le long duquel chaque tube (54) d'insufflation occupe sa position extrême escamotée ;
- un deuxième secteur (S1) angulaire d'insertion le long duquel chaque tube (54) d'insufflation se déplace depuis sa position extrême escamotée jusqu'à sa position extrême insérée ;
- un troisième secteur (S2) angulaire inséré le long duquel chaque tube (54) d'insufflation occupe sa position extrême insérée ;
- un quatrième secteur (S3) angulaire d'escamotage le long duquel chaque tube (54) d'insufflation se déplace depuis sa position extrême insérée jusqu'à sa position extrême escamotée ;
le secteur (72-ON) angulaire actif du distributeur (60) fluidique tournant coïncidant au moins avec le troisième secteur (S2) angulaire inséré.

11. Dispositif (20) selon la revendication précédente, **caractérisé en ce que** le secteur (72-OFF) angulaire inactif du distributeur (60) fluidique tournant coïncide au moins avec le deuxième secteur (S1) angulaire d'insertion.

## Patentansprüche

1. Drehender Fluidverteiler (60) für eine Vorrichtung (20) zur Bearbeitung des Inneren von Vorformen (22) aus thermoplastischem Material durch Einblasen eines Bearbeitungsgases, der ein auf einen ortsfesten Sockel (34) um eine Mittelachse (Z1) rotierend montiertes Karussell (32) aufweist, wobei Halteorgane (38) der Vorformen (22) und Blasrohre (54) in das Karussell (32) integriert sind, die jedem Halteorgan (38) entsprechend in das Karussell (32) integriert sind, wobei der Verteiler aufweist:
- einen internen Stator (62), der dazu bestimmt ist, bezüglich eines Sockels (34) ortsfest montiert zu werden, wobei der Stator (62) eine Versorgungsleitung (74) mit Bearbeitungsgas aufweist;
- einen externen Rotor (64), der um eine Mittelachse (Z1) rotierend um den Stator (62) montiert ist und der mindestens eine den Rotor (64) radial durchquerende Bearbeitungsöffnung (66A) aufweist, die dazu bestimmt ist, an mindestens ein Rohr (54) zum Einblasen des Bearbeitungsgases in eine Vorform (22) angeschlossen zu werden, wobei die Bearbeitungsöffnung (66A) eine Kreisbahn um die Mittelachse (Z1) herum durchläuft;
- eine zwischen den Stator (62) und den Rotor (64) eingefügte Verteilungskammer (70A), wobei die Verteilungskammer (70A) durch die Versorgungsleitung (74) mit Bearbeitungsgas versorgt wird, und die Bearbeitungsöffnung (66A) in die Verteilungskammer (70A) in mindestens einem ersten Winkelbereich ihrer Kreisbahn mündet, "aktiver Winkelbereich (72-ON)" genannt;
**dadurch gekennzeichnet, dass** der Stator (62) eine ortsfeste Verschlussseite (82A) aufweist, die jede Bearbeitungsöffnung (66A) in einem zweiten Winkelbereich ihrer Kreisbahn verschließt, "inaktiver Winkelbereich (72-OFF)" genannt.

2. Drehender Fluidverteiler (60) nach dem vorhergehenden Anspruch, **dadurch gekennzeichnet, dass** die Kreisbahn der Bearbeitungsöffnung (66A) in zwei Winkelbereiche aufgeteilt ist, die einen einzigen aktiven Winkelbereich (72-ON) und einen einzigen inaktiven Winkelbereich (72-OFF) enthalten.

3. Drehender Fluidverteiler (60) nach einem der vorhergehenden Ansprüche, **dadurch gekennzeichnet, dass** der Stator (62) einen Kern (86), der mit der Versorgungsleitung (74) ausgestattet ist, und ein aufgestecktes und am Kern (86) befestigtes Element aufweist, das die Verschlussseite (82A) aufweist.

4. Drehender Fluidverteiler (60) nach dem vorhergehenden Anspruch, **dadurch gekennzeichnet, dass** das aufgesteckte Element von einem Bearbeitungsring (88A) gebildet wird, der radial zwischen dem Kern (86) des Stators (62) und dem Rotor (64) eingefügt wird.

5. Drehender Fluidverteiler (60) nach dem vorhergehenden Anspruch, **dadurch gekennzeichnet, dass** die Verteilungskammer (70A) radial zwischen einem Segment des Bearbeitungsrings (88A) und dem Rotor (64) begrenzt wird.

6. Drehender Fluidverteiler (60) nach einem der vorhergehenden Ansprüche, **dadurch gekennzeichnet, dass** der Rotor (64) eine Vielzahl von Bearbeitungsöffnungen (66A) aufweist, die gleichmäßig um den Rotor (64) herum verteilt sind.

7. Drehender Fluidverteiler (60) nach einem der vorhergehenden Ansprüche, **dadurch gekennzeichnet, dass** der Rotor (64) mindestens eine aufgesteckte Muffe (64A) aufweist, die alle Bearbeitungsöffnungen (66A) aufweist.

8. Drehender Fluidverteiler (60) nach einem der Ansprüche 4 oder 5, **dadurch gekennzeichnet, dass** der Bearbeitungsring (88A) austauschbar ist, um die Ausdehnung des inaktiven Winkelbereichs (72-OFF) regeln zu können.

9. Vorrichtung (20) zur Bearbeitung des Inneren von Vorformen (22) aus thermoplastischem Material durch Einblasen von Bearbeitungsgas, die aufweist:
- ein auf einen ortsfesten Sockel (34) um eine Mittelachse (Z1) rotierend montiertes Karussell (32), wobei Halteorgane (38) der Vorformen (22) in das Karussell (32) integriert sind;
- Einblasrohre (54), die entsprechend jedem Halteorgan (38) in das Karussell (32) integriert sind;
**dadurch gekennzeichnet, dass** sie einen drehenden Fluidverteiler (60) aufweist, der nach einem der vorhergehenden Ansprüche hergestellt ist.

10. Bearbeitungsvorrichtung (20) nach dem vorhergehenden Anspruch, **dadurch gekennzeichnet, dass** jedes Einblasrohr (54) zwischen einer eingezogenen Endstellung, in der es dazu bestimmt ist, ganz außerhalb einer vom zugeordneten Halteorgan (38) getragenen Vorform (22) zu sein, und einer eingeführten Endstellung gleitend auf das Karussell (32) montiert ist, in der es dazu bestimmt ist, ins Innere einer vom zugeordneten Halteorgan (38) getragenen Vorform (22) eingeführt zu sein, wobei die Vorrichtung (20) mindestens ein Stellglied (56) aufweist, das abhängig von der Winkelstellung des Karussells (32) automatisch gesteuert wird, wobei jedes Einblasrohr (54) eine Kreisbahn durchläuft, die von stromaufwärts nach stromabwärts aufgeteilt ist in:
- einen ersten eingezogenen Winkelbereich (S0), entlang dessen jedes Einblasrohr (54) seine eingezogene Endstellung einnimmt;
- einen zweiten Einführwinkelbereich (S1), entlang dessen jedes Einblasrohr (54) sich von seiner eingezogenen Endstellung bis zu seiner eingeführten Endstellung verschiebt;
- einen dritten eingeführten Winkelbereich (S2), entlang dessen jedes Einblasrohr (54) seine eingeführte Endstellung einnimmt;
- einen vierten Einziehwinkelbereich (S3), entlang dessen jedes Einblasrohr (54) sich von seiner eingeführten Endstellung bis zu seiner eingezogenen Endstellung verschiebt;
wobei der aktive Winkelbereich (72-ON) des drehenden Fluidverteilers (60) mindestens mit dem dritten eingeführten Winkelbereich (S2) übereinstimmt.

11. Vorrichtung (20) nach dem vorhergehenden Anspruch, **dadurch gekennzeichnet, dass** der inaktive Winkelbereich (72-OFF) des drehenden Fluidverteilers (60) mindestens mit dem zweiten Einführwinkelbereich (S1) übereinstimmt.

## Claims

1. Rotary fluid distributor (60) for a treatment device (20) for treating the interior of preforms (22) made of thermoplastic material by injection of treatment gas, comprising a carousel (32) mounted so as to be able to rotate about a central axis (Z1) on a fixed base (34), the carousel (32) carrying holding members (38) for holding preforms (22), and injection tubes (54) which are carried on the carousel (32) corresponding to each holding member (38), said distributor comprising:
-- an internal stator (62) which is intended to be mounted fixed with respect to a base (34), the stator (62) comprising a treatment gas supply pipe (74);
-- an external rotor (64) which is mounted so as to be able to rotate around the stator (62) about a central axis (Z1) and which comprises at least one treatment port (66A) passing radially through the rotor (64), said treatment port being intended to be connected to at least one injection tube (54) for injecting treatment gas into a preform (22), the treatment port (66A) travelling along a circular path about the central axis (Z1);
-- a distribution chamber (70A) interposed radially between the stator (62) and the rotor (64), the distribution chamber (70A) being supplied with treatment gas by the supply pipe (74), and the treatment port (66A) opening into the distribution chamber (70A) over at least a first angular sector of its circular path, referred to as "active angular sector (72-ON)";
**characterized in that** the stator (62) comprises a fixed shut-off face (82A) which shuts off each treatment port (66A) over a second angular sector of their circular path, referred to as "inactive angular sector (72-OFF)".

2. Rotary fluid distributor (60) according to the preceding claim, **characterized in that** the circular path of the treatment port (66A) is divided into two angular sectors comprising a single active angular sector (72-ON) and a single inactive angular sector (72-OFF).

3. Rotary fluid distributor (60) according to either one of the preceding claims, **characterized in that** the stator (62) comprises a core (86) which is equipped with the supply pipe (74), and an attached element which is fastened to the core (86) and which comprises the shut-off face (82A).

4. Rotary fluid distributor (60) according to the preceding claim, **characterized in that** the attached element is formed by a treatment ring (88A) which is interposed radially between the core (86) of the stator (62) and the rotor (64).

5. Rotary fluid distributor (60) according to the preceding claim, **characterized in that** the distribution chamber (70A) is delimited radially between a segment of the treatment ring (88A) and the rotor (64).

6. Rotary fluid distributor (60) according to any one of the preceding claims, **characterized in that** the rotor (64) comprises a plurality of treatment ports (66A) which are distributed evenly around the rotor (64).

7. Rotary fluid distributor (60) according to any one of the preceding claims, **characterized in that** the rotor (64) comprises at least one attached sleeve (64A) which comprises all of the treatment ports (66A).

8. Rotary fluid distributor (60) according to either one of Claims 4 and 5, **characterized in that** the treatment ring (88A) is interchangeable in such a way as to be able to adjust the extent of the inactive angular sector (72-OFF) .

9. Treatment device (20) for treating the interior of preforms (22) made of thermoplastic material by injection of treatment gas, comprising:
- a carousel (32) mounted so as to be able to rotate about a central axis (Z1) on a fixed base (34), the carousel (32) carrying holding members (38) for holding preforms (22);
- injection tubes (54) which are carried on the carousel (32) corresponding to each holding member (38);
**characterized in that** it comprises a rotary fluid distributor (60) implemented according to any one of the preceding claims.

10. Treatment device (20) according to the preceding claim, **characterized in that** each injection tube (54) is mounted so as to be able to slide on the carousel (32) between a retracted extreme position in which it is intended to be entirely outside a preform (22) borne by the associated holding member (38), and an inserted extreme position in which it is intended to be inserted in the interior of a preform (22) borne by the associated holding member (38), the device (20) comprising at least one actuator (56) which is controlled automatically as a function of the angular position of the carousel (32), each injection tube (54) travelling along a circular path which is divided, from upstream to downstream, into:
- a first, retracted angular sector (S0) along which each injection tube (54) occupies its retracted extreme position;
- a second, insertion angular sector (S1) along which each injection tube (54) moves from its retracted extreme position as far as its inserted extreme position;
- a third, inserted angular sector (S2) along which each injection tube (54) occupies its inserted extreme position;
- a fourth, retraction angular sector (S3) along which each injection tube (54) moves from its inserted extreme position as far as its retracted extreme position;
the active angular sector (72-ON) of the rotary fluid distributor (60) coinciding at least with the third, inserted angular sector (S2).

11. Device (20) according to the preceding claim, **characterized in that** the inactive angular sector (72-OFF) of the rotary fluid distributor (60) coincides at least with the second, insertion angular sector (S1).
